# EUROPÄISCHE PATENTSCHRIFT

(11) **EP 2 568 313 B1**
(45) Veröffentlichungstag und Bekanntmachung des Hinweises auf die Patenterteilung: **28.03.2018**
(21) Anmeldenummer: 12005009.1
(22) Anmeldetag: 06.07.2012
(51) Int. Cl.: G01S 17/02

(54) **VERFAHREN ZUM ERFASSEN EINES OBJEKTS IN EINEM UMFELD EINES KRAFTFAHRZEUGS**
METHOD FOR DETECTING AN OBJECT NEAR A MOTOR VEHICLE
PROCÉDÉ DE DÉTECTION D'UN OBJET DANS UN ENVIRONNEMENT D'UN VÉHICULE AUTOMOBILE

(30) Priorität: 07.09.2011 DE 102011112715
(43) Veröffentlichungstag der Anmeldung: 13.03.2013
(73) Patentinhaber: Audi AG, 85045 Ingolstadt (DE)
(72) Erfinder: Mählisch, Mirko, 85080 Gaimersheim (DE); Wender, Stefan, 85055 Ingolstadt (DE); Rudolph, Matthias, 85051 Ingolstadt (DE)
(74) Vertreter: Thielmann, Frank

(56) Entgegenhaltungen:
- EP-A1- 2 045 623
- EP-A2- 0 686 857
- EP-A2- 1 506 893
- US-A- 4 926 170
- US-A- 5 515 042
- US-A1- 2011 025 521
- US-A1- 2011 205 521
- US-B1- 6 502 053

## Beschreibung

Die vorliegende Erfindung betrifft ein Verfahren zum Erfassen eines Objekts in einem Umfeld eines Kraftfahrzeugs. Überdies betrifft die vorliegende Erfindung ein Kraftfahrzeug.

Moderne Kraftfahrzeuge verfügen über eine Reihe von Fahrerassistenzsystemen, bei denen ein Objekt im Umfeld des Kraftfahrzeugs erfasst wird und in Abhängigkeit von dem erfassten Objekt eine Aktion ausgeführt oder ein entsprechender Hinweis an den Fahrer ausgegeben wird. Beispiele hierfür sind Abstandswarnsysteme, Abstandsregelsysteme, Systeme zum aktiven Fußgängerschutz, Bremsassistenten oder Einparkhilfen.

Die DE 103 36 681 D4 beschreibt ein Kraftfahrzeug mit einer Einrichtung zur Umfelderfassung mit einem Erfassungsmittel und der dazugehörigen Analyseeinrichtung. Zudem umfasst das Kraftfahrzeug eine Steuereinrichtung, mit der in Abhängigkeit von einem von dem Erfassungsmittel erfassten Objekt eine Leuchteinrichtung des Kraftfahrzeugs ansteuerbar ist. Bevorzugt umfasst das Kraftfahrzeug ein weiteres Erfassungsmittel, mit dem das Ergebnis des ersten Erfassungsmittels verifiziert werden kann. Somit kann ein Objekt besonders zuverlässig erfasst werden und individuell durch die Leuchteinrichtung beleuchtet werden.

Die DE 10 2004 013 252 A1 offenbart ein Verfahren zur Verbesserung der Sicht in einem Kraftfahrzeug, bei dem ein Nachtsichtsystem verwendet wird, das Licht mit Wellenlängen im nahen infraroten Wellenlängenbereich aussendet. Hierbei wird mit einem infrarotempfindlichen Sensor und mit entsprechenden Distanz messenden Umfeldsensor des Kraftfahrzeugs ermittelt, ob sich ein Lebewesen im Beeinträchtigungsbereich des Nachtsichtsystems befindet. Wird ein Lebewesen detektiert, wird die Beleuchtungseinrichtung des Nachtsichtsystems deaktiviert, um eine Beeinträchtigung der Augen des Lebewesens durch die Beleuchtungseinrichtung des Nachsichtsystems zu vermeiden.

Die DE 198 45 568 A1 beschreibt eine Vorrichtung zur Objekterfassung für Kraftfahrzeuge, die eine Vielzahl von Abstandssensoren aufweist. Die Abstandssensoren sind wahlweise durch eine Auswerteeinheit ansteuerbar und die Reichweite und/oder die Messwiederholfrequenz und/oder die Auflösung und/oder die Betriebsart der Abstandssensoren sind veränderbar.

Aus der DE 100 47 195 A1 ist ein Radarsensor bekannt, der auf dem Puls-Echo-Verfahren basiert und der einen Schalter aufweist, der die Sendesignale zu bestimmten Zeitpunkten abschaltet. Mit einem Verzögerungselement werden Pulse für einen Mischer im Empfangspfad in des Radarsensors verzögert, um anhand der Verzögerungszeit die Entfernung zwischen Radarsensor und Hindernis zu bestimmen. Der Schalter verhindert ein Überkoppeln von Sendepfad in den Empfangspfad und damit eine Erzeugung von Geisterhindernissen.

Zudem beschreibt die US 5 283 622 A eine Vorrichtung zur Abstandsmessung für ein Kraftfahrzeug, wobei der von einer Laserlichtquelle emittierte Lichtstrahl von einem Objekt reflektiert und von einem Fotosensor detektiert wird. Dabei ist der Bereich, der von der Laserlichtquelle beleuchtet wird, in Abhängigkeit des Abstands zu dem im Kraftfahrzeugvorfeld detektierten Objekt variierbar.

Des Weiteren beschreibt die EP 0 686 857 A2 eine Vorrichtung zum Messen der Distanz zwischen einem Kraftfahrzeug und einem Objekt. Dabei wird zunächst mit einer Kamera ein Objekt im Umfeld des Kraftfahrzeugs erfasst. Wenn ein Objekt im Umfeld des Kraftfahrzeugs erfasst wurde, wird eine Vorrichtung zum Bestimmen des Abstands zwischen dem Kraftfahrzeug und dem Objekt aktiviert, wobei die Vorrichtung eine Sendeeinrichtung, die Laserstrahlen aussendet, und eine entsprechende Empfangseinheit umfasst.

Um den Abstand zwischen einem Kraftfahrzeug und einem Objekt besonders genau bestimmen zu können, werden üblicherweise Erfassungseinrichtungen verwendet, die ein Signal aussenden und anhand der Laufzeit des von dem Objekt reflektierten Signals den Abstand zu dem Objekt bestimmen. Diese aktiven Erfassungseinrichtungen bieten den Vorteil, dass mit ihnen der Abstand bzw. die Distanz zwischen dem Kraftfahrzeug und dem Objekt besonders exakt bestimmt werden kann. Nachteilig an diesen aktiven Erfassungseinrichtungen ist allerdings, dass sie üblicherweise im Betrieb einen hohen Energieverbrauch aufweisen und somit hohe Kosten verursachen. Passiven Erfassungseinrichtungen, die lediglich das Objekt erfassen, benötigen üblicherweise weniger Energie, allerdings kann mit ihnen der Abstand zwischen dem Kraftfahrzeug und dem Objekt nur näherungsweise ermittelt werden.

Die Aufgabe der vorliegenden Erfindung ist es daher, den Abstand zwischen einem Kraftfahrzeug und einem Objekt besonders exakt aber dennoch energieeffizient zu erfassen.

Diese Aufgabe wird erfindungsgemäß durch ein Verfahren mit den Merkmalen des Patentanspruch 1 sowie durch Kraftfahrzeug mit den Merkmalen des Patentanspruchs 3 gelöst.

Erfindungsgemäß wird bereitgestellt ein Verfahren zum Erfassen eines Objekts in einem Umfeld eines Kraftfahrzeugs durch Erfassen des Objekts mit einer ersten Erfassungseinrichtung des Kraftfahrzeugs, und Aktivieren einer von der ersten unterschiedlichen, zweiten Erfassungseinrichtung, wobei mit der zweiten Erfassungseinrichtung eine Entfernung zwischen dem Kraftfahrzeug und dem Objekt bestimmt wird.

Als erste Erfassungseinrichtung wird üblicherweise eine solche Erfassungseinrichtung verwendet, mit der grundsätzlich das Vorhandensein eines Objekts im Umfeld des Kraftfahrzeugs ermittelt werden kann. Objekte können in diesem Zusammenhang sich bewegende Objekte, wie sich auf der Fahrbahn befindende Kraftfahrzeuge, Motorradfahrer, Fahrradfahrer oder Fußgänger sein. Ebenso kann ein solches Objekt ein sich auf der Fahrbahn befindendes Hindernis, eine Fahrbahnbegrenzung oder Objekte außerhalb der Fahrbahn sein. Die erste Erfassungseinrichtung soll bevorzugt so ausgebildet sein, dass sie möglichst wenig Energie benötigt und somit kostengünstig betrieben werden kann. Diese erste Erfassungseinrichtung kann im Betrieb des Kraftfahrzeugs dauerhaft aktiviert sein, damit zuverlässig erfasst werden kann, ob sich ein Objekt im Umfeld des Kraftfahrzeugs befindet.

Wird mit der ersten Erfassungseinrichtung ein entsprechendes Objekt im Umfeld des Kraftfahrzeugs erfasst, wird die zweite Erfassungseinrichtung aktiviert. Die zweite Erfassungseinrichtung ist bevorzugt so ausgebildet, dass mit ihr ein Abstand zwischen dem Kraftfahrzeug und dem Objekt exakt bestimmt werden kann. Somit wird die zweite Erfassungseinrichtung, die üblicherweise mehr elektrische Energie als die erste Erfassungseinrichtung benötigt, nur dann eingeschaltet, wenn sich wirklich ein Objekt im Umfeld des Kraftfahrzeugs befindet. Beim Einschalten bzw. Aktivieren der zweiten Erfassungseinrichtung kann auch die erste Erfassungseinrichtung deaktiviert werden. Somit kann auf besonders effiziente Weise der Abstand von einem Kraftfahrzeug zu einem Objekt genau bestimmt werden.

Erfindungsgemäß umfasst die zweite Erfassungseinrichtung eine Sendeeinheit und eine Empfangseinheit, wobei zum Bestimmen der Entfernung zwischen dem Kraftfahrzeug und dem Objekt von der Sendeeinheit ein Signal ausgesendet wird und von der Empfangseinheit eine Laufzeit des von dem Objekt reflektierten Signals bestimmt wird. Durch dieses Messprinzip kann mit der zweiten Erfassungseinrichtung der Abstand zwischen dem Kraftfahrzeug und einem Objekt besonders exakt bestimmt werden. Als Signal kann die Sendeeinheit beispielsweise optische Strahlung, Radarstrahlung, (gepulste) Laserstrahlung, Schallwellen oder elektromagnetische Wellen aussenden. Auf diese Weise kann der Abstand zwischen dem Kraftfahrzeug und dem Objekt besonders exakt und zuverlässig bestimmt werden.

Erfindungsgemäß wird die Empfangseinheit während des Betriebs des Kraftfahrzeugs aktiviert und die Sendeeinheit wird aktiviert, falls mit der ersten Erfassungseinrichtung ein Objekt erfasst wird. Somit wird die Sendeeinheit der zweiten Erfassungseinrichtung nur aktiviert, wenn sie benötigt wird. Da üblicherweise die Sendeeinheit der zweiten Erfassungseinrichtung einen hohen Energieverbrauch aufweist, kann auf diese Weise effektiv elektrische Energie und somit Kosten eingespart werden.

Erfindungsgemäß wird von der Sendeeinheit Licht im infraroten Wellenlängenbereich als das Signal ausgesendet. Mittels einer Infrarotbeleuchtung als Sendeeinheit kann der Abstand zwischen dem Objekt und dem Kraftfahrzeug besonders exakt bestimmt werden, da die zweite Erfassungseinrichtung somit unempfindlich gegenüber Helligkeitsschwankungen des Tageslichts ist. Ebenso kann die zweite Erfassungseinrichtung als Fotomischdetektor (PMD-Kamera) ausgebildet sein. Hierbei wird das Objekt im Umfeld des Kraftfahrzeugs von Lichtimpulsen beleuchtet und die Laufzeit des reflektierten Signals gemessen (Time of Flight). Ebenso kann der Phasenversatz zwischen dem ausgesendeten und dem reflektierten Signal gemessen werden. Die PMD-Kamera umfasst üblicherweise ein entsprechendes Halbleiterbauelement, mit dem die reflektierten Lichtstrahlen erfasst bzw. detektiert werden können. Dieses Halbleiterbauelement kann auch so ausgebildet sein, dass in Abhängigkeit von der Entfernung des Objekts zu dem Kraftfahrzeug bzw. zu dem Halbleiterbauelement ein entsprechendes Intensitätsbild erzeugt wird. Somit kann der Abstand zwischen dem Kraftfahrzeug und dem Objekt besonders genau ermittelt werden.

Erfindungsgemäß umfasst die Sendeeinheit eine Mehrzahl von Leuchtmitteln, wobei beim Aktivieren der zweiten Erfassungseinrichtung diejenigen Leuchtmittel aktiviert werden, die im Betrieb einen dem erfassten Objekt in vorgegebener Weise zugeordneten Bereich im Umfeld des Kraftfahrzeugs ausleuchten. Die Sendeeinheit der zweiten Erfassungseinrichtung umfasst üblicherweise eine Mehrzahl von Leuchtmitteln, die beispielsweise in einer entsprechenden Matrix angeordnet sein können. Als Leuchtmittel werden bevorzugt Leuchtdioden (LED's) verwendet. Hierbei muss nicht das komplette Sichtfeld der zweiten Erfassungseinrichtung ausgeleuchtet werden, sondern es können nur diejenigen Leuchtmittel bzw. Leuchtdioden angesteuert werden, mit denen das Objekt ausreichend ausgeleuchtet wird. Somit kann die Sendeeinheit und somit die zweite Empfangseinrichtung besonders energieeffizient betrieben werden und zudem der Abstand zwischen dem Kraftfahrzeug und dem Objekt besonders exakt bestimmt werden. Hierzu können die von der ersten Erfassungseinrichtung bereitgestellten Daten über die Position und/oder die Abmessungen des Objekts mittels einer entsprechenden Steuereinrichtung an die zweite Erfassungseinrichtung übermittelt werden, damit von der zweiten Erfassungseinrichtung die jeweiligen Leuchtmittel angesteuert werden können.

Außerdem wird die Empfangseinheit der zweiten Erfassungseinrichtung als erste Erfassungseinrichtung zu dem Erfassen des Objekts verwendet. Zunächst genügt es, ein Objekt im Umfeld des Kraftfahrzeugs zu erkennen. Hierzu werden üblicherweise keine zweidimensionalen, tiefenaufgelöste Kamerabilder benötigt. Es ist beispielsweise ausreichend, ein monokulares Bild einer Kamera bzw. Erfassungseinrichtung zu verwenden. Zu diesem Zweck kann bevorzugt die Empfangseinheit der zweiten Erfassungseinrichtung genutzt werden. Somit werden keine zusätzlichen Bauteile bzw. Erfassungseinrichtungen benötigt, um ein Objekt im Umfeld des Kraftfahrzeugs zu erfassen. Auf diese Weise können Bauraum und Kosten eingespart werden.

Erfindungsgemäß wird die Empfangseinheit der zweiten Erfassungseinrichtung und eine optische Sensoreinheit des Kraftfahrzeugs zu dem Erfassen des Objekts verwendet. Zusätzlich zu der ersten Erfassungseinrichtung, die beispielsweise die Empfangseinheit der zweiten Erfassungseinrichtung ist, kann eine zusätzliche optische Sensoreinheit des Kraftfahrzeugs genutzt werden. Zu diesem Zweck kann beispielsweise eine bereits im Kraftfahrzeug verbaute Kamera verwendet werden. Somit kann durch die Signale der beiden Kameras bzw. optischen Sensoreinrichtungen ein zweidimensionales Bild bzw. ein Stereobild erstellt werden, mit dem das Objekt im Umfeld des Kraftfahrzeugs im Hinblick auf die Entfernung zu dem Kraftfahrzeug und dessen Abmessung bzw. Position genauer erfasst werden kann. Auf diese Weise kann das Objekt im Umfeld des Kraftfahrzeugs zuverlässig und dennoch kosteneffizient erfasst werden, da üblicherweise bereits im Kraftfahrzeug verwendete Sensoreinrichtungen genutzt werden.

In einer Ausführungsform wird zumindest ein Umfeldsensor des Kraftfahrzeugs als erste Erfassungseinrichtung zu dem Erfassen des Objekts verwendet. Zum Erfassen des Objekts können bereits im Kraftfahrzeug verbaute Umfeldsensoren genutzt werden, die beispielsweise Teil eines Fahrerassistenzsystems des Kraftfahrzeugs sind. Hierbei kann beispielsweise ein Radarsensor, eine Ferninfrarotkamera, ein Laserscanner oder dergleichen verwendet werden. Somit kann effizient und kostengünstig das Objekt im Umfeld des Kraftfahrzeugs erfasst werden.

Überdies wird erfindungsgemäß bereitgestellt ein Kraftfahrzeug mit einer ersten Erfassungseinrichtung zum Erfassen eines Objekts in einem Umfeld des Kraftfahrzeugs, einer von der ersten unterschiedlichen, zweiten Erfassungseinrichtung zum Erfassen des Objekts in dem Umfeld des Kraftfahrzeugs, und einer Steuereinrichtung zum Aktivieren der zweiten Erfassungseinrichtung, wobei die zweite Erfassungseinrichtung dazu ausgebildet ist, einen Abstand zwischen dem Kraftfahrzeug und dem Objekt zu erfassen. Zudem umfasst die Erfassungseinrichtung eine Sendeeinheit und eine Empfangseinheit, wobei zum Bestimmen der Entfernung zwischen dem Kraftfahrzeug und dem Objekt von der Sendeeinheit ein Signal aussendbar ist und von der Empfangseinheit eine Laufzeit des von dem Objekt reflektierten Signals bestimmbar ist. Die Steuereinrichtung ist dazu ausgebildet, die Empfangseinheit während eines Betriebs des Kraftfahrzeugs zu aktiveren und die Sendeeinheit zu aktivieren, falls mit der Erfassungseinrichtung ein Objekt erfasst ist. Zudem ist die Sendeeinheit dazu ausgebildet, Licht im infraroten Wellenlängenbereich als das Signal auszusenden. Dabei umfasst die Sendeeinheit eine Mehrzahl von Leuchtmitteln. Zudem ist die Steuereinrichtung dazu ausgebildet, beim Aktivieren der zweiten Erfassungseinrichtung diejenigen Leuchtmittel zu aktivieren, die im Betrieb einen dem erfassten Objekt in vorgegebener Weise zugeordneten Bereich im Umfeld des Kraftfahrzeugs ausleuchten. Des Weiteren wird die Empfangseinheit der zweiten Erfassungseinrichtung und eine optische Sensoreinheit des Kraftfahrzeugs zu dem Erfassen des Objekts verwendet.

Die zuvor im Zusammenhang mit dem erfindungsgemäßen Verfahren beschriebenen Weiterbildungen lassen sich ebenso auf das erfindungsgemäße Kraftfahrzeug übertragen.

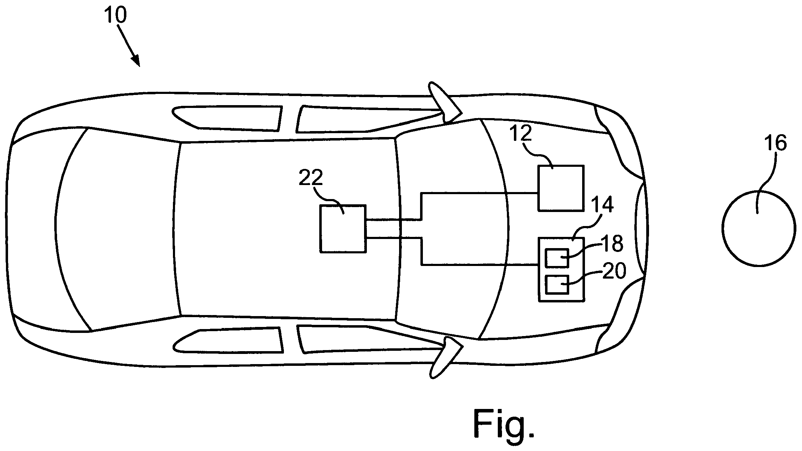

Die vorliegende Erfindung wird nun anhand der beigefügten Zeichnung näher erläutert. Die Figur zeigt eine schematische Darstellung eines Kraftfahrzeugs.

Das nachfolgend näher geschilderte Ausführungsbeispiel stellt eine bevorzugte Ausführungsform der vorliegenden Erfindung dar.

Die Figur zeigt eine schematische Darstellung eines Kraftfahrzeugs 10 in einer Draufsicht. Das Kraftfahrzeug 10 umfasst eine erste Erfassungseinrichtung 12 und eine von der ersten unterschiedliche, zweite Erfassungseinrichtung 14. Die erste Erfassungseinrichtung 12 ist dazu ausgebildet, das Objekt 16 im Umfeld des Kraftfahrzeugs 10 zu erfassen. Das in der Figur schematisch dargestellte Objekt 16 kann beispielsweise ein weiteres Kraftfahrzeug, ein Motorrad, ein Fahrradfahrer oder ein Fußgänger sein. Ebenso kann das Objekt 16 ein sich auf der Fahrbahn befindendes Hindernis sein. Zudem kann das Objekt 16 eine entsprechende Fahrbahnbegrenzung, wie eine Leitplanke oder dergleichen sein. Das Objekt 16 kann sich bewegen oder unbewegt sein.

Die erste Erfassungseinrichtung 12 kann beispielsweise als optischer Sensor, insbesondere als Kamera ausgebildet sein. Die erste Erfassungseinrichtung 12 kann hierzu ein entsprechendes Bildverarbeitungsprogramm umfassen, mit dem entsprechende Objekte 16 bzw. Muster unterschieden werden können. Ebenso kann die erste Erfassungseinrichtung 12 ein hier nicht dargestelltes Speicherelement umfassen, auf dem zuvor festgelegte Muster bzw. Objekte 16 hinterlegt sind. Die erste Erfassungseinrichtung 12 kann beispielsweise im Kühlergrill des Kraftfahrzeugs 10 oder hinter der Windschutzscheibe angeordnet sein.

Die zweite Erfassungseinrichtung 14 ist dazu ausgebildet, einen Abstand zwischen dem Kraftfahrzeug 10 und dem Objekt 16 zu ermitteln. Die zweite Erfassungseinrichtung 14 umfasst eine Sendeeinheit 20 und eine Empfangseinheit 18. Hierbei wird üblicherweise mit der Sendeeinheit 20 ein Signal ausgesendet, das von dem Objekt 16 reflektiert wird und von der Empfangseinheit 18 empfangen wird. Somit kann anhand der Laufzeit des Signals der Abstand zwischen dem Kraftfahrzeug 10 bzw. der Empfangseinheit 18 und dem Objekt 16 ermittelt werden. Als Signal kann von der Sendeeinheit 20 beispielsweise ein Radarsignal, ein (gepulstes) Lasersignal, ein akustisches Signal, ein optisches Signal oder dergleichen ausgesendet werden. Bevorzugt sendet die Sendeeinheit 20 Licht im infraroten Wellenlängenbereich aus. Die Empfangseinheit 18 der zweiten Erfassungseinrichtung 14 ist dazu ausgebildet, das von dem Objekt 16 reflektierte Signal zu empfangen. Bevorzugt sendet die Sendeeinheit 20 Lichtstrahlen im infraroten Wellenlängenbereich aus. Die Empfangseinheit 18 kann hierzu entsprechende Halbleiterbauelemente umfassen, mit denen das von dem Objekt 16 reflektierte Licht erfasst werden kann. Auch die zweite Erfassungseinrichtung 14 ist bevorzugt im Kühlergrill des Kraftfahrzeugs 10 oder hinter der Windschutzscheibe angeordnet.

Im Betrieb des Kraftfahrzeugs 10 kann auch zugleich die erste Erfassungseinrichtung 12 aktiviert sein. Wird mit der ersten Erfassungseinrichtung 12 ein entsprechendes Objekt 16 im Umfeld des Kraftfahrzeugs 10 erfasst, so wird zusätzlich die zweite Erfassungseinrichtung 14 aktiviert. Zu diesem Zweck können die erste Erfassungseinrichtung 12 und die zweite Erfassungseinrichtung 14 mit einer entsprechenden Steuereinrichtung 22 verbunden bzw. gekoppelt sein. Falls die erste Erfassungseinrichtung 12 ein entsprechendes Objekt 16 erfasst, kann ein Signal an die Steuereinrichtung 22 übermittelt werden. Dieses Signal kann Informationen über die Position und/oder die Abmessungen des Objekts 16 enthalten. Die Steuereinrichtung 22 kann ein entsprechendes Signal aussenden, durch das die zweite Erfassungseinrichtung 14 aktiviert wird. Hierbei können auch die Informationen über die Position und/oder die Abmessungen des Objekts 16 an die zweite Erfassungseinrichtung 14 übertragen werden. Somit wird die zweite Erfassungseinrichtung 14 nur genutzt, wenn mittels der ersten Erfassungseinrichtung 12 ein entsprechendes Objekt 16 erkannt wird. Da die zweite Erfassungseinrichtung 14 üblicherweise mehr elektrische Energie als die erste Erfassungseinrichtung 12 benötigt, kann somit Energie eingespart werden.

Die erste Erfassungseinrichtung 12 kann beispielsweise durch bereits im Kraftfahrzeug 10 verwendete Umfeldsensoren gebildet sein. Die erste Erfassungseinrichtung 12 kann als Radarsensor, Ferninfrarotsensor oder Kamera ausgebildet sein. In einer Ausführungsform kann die erste Erfassungseinrichtung 12 durch die Empfangseinheit 18 der zweiten Erfassungseinrichtung 14 gebildet sein. Ebenso kann die erste Erfassungseinrichtung 12 beispielsweise durch zwei unterschiedliche Erfassungseinrichtungen bzw. Umfeldsensoren gebildet sein.

Die Sendeeinheit 20 der zweiten Erfassungseinrichtung 14 umfasst üblicherweise eine Mehrzahl von Leuchtmitteln, insbesondere Leuchtdioden. Hierbei können beim Aktivieren der zweiten Erfassungseinrichtung 14 lediglich diejenigen Leuchtmittel der Sendeeinheit 20 aktiviert werden, die im Betrieb einen dem erfassten Objekt 16 in vorgegebener Weise zugeordneten Bereich im Umfeld des Kraftfahrzeugs 10 ausleuchten. Auf diese Weise kann der Abstand zwischen dem Kraftfahrzeug 10 und dem Objekt 16 besonders energieeffizient ermittelt werden.

## Patentansprüche

1. Verfahren zum Erfassen eines Objekts (16) in einem Umfeld eines Kraftfahrzeugs (10) durch
- Erfassen des Objekts (16) mit einer ersten Erfassungseinrichtung (12) des Kraftfahrzeugs (10),
- Aktivieren einer von der ersten unterschiedlichen, zweiten Erfassungseinrichtung (14) und
- Bestimmen einer Entfernung zwischen dem Kraftfahrzeug (10) und dem Objekt (16) mit der zweiten Erfassungseinrichtung (14), wobei
- die zweite Erfassungseinrichtung (14) eine Sendeeinheit (20) und eine Empfangseinheit (18) umfasst, und
- das Aktivieren der zweiten Erfassungseinrichtung (14) erfolgt, indem die Empfangseinheit (18) während eines Betriebs des Kraftfahrzeugs (10) aktiviert wird und die Sendeeinheit (20) nur aktiviert wird, falls mit der ersten Erfassungseinrichtung (12) ein Objekt (16) erfasst wird, und
- zum Bestimmen der Entfernung zwischen dem Kraftfahrzeug (10) und dem Objekt (16) von der Sendeeinheit (20) ein Signal ausgesendet wird und von der Empfangseinheit (18) eine Laufzeit des von dem Objekt (16) reflektierten Signals bestimmt wird,
**dadurch gekennzeichnet, dass**
- von der Sendeeinheit (20) Licht im infraroten Wellenlängenbereich als das Signal ausgesendet wird,
- die Sendeeinheit (20) eine Mehrzahl von Leuchtmitteln umfasst, wobei beim Aktivieren der zweiten Erfassungseinrichtung (14) diejenigen Leuchtmittel aktiviert werden, die im Betrieb einen dem erfassten Objekt (16) in vorgegebener Weise zugeordneten Bereich im Umfeld des Kraftfahrzeugs (10) ausleuchten und
- die Empfangseinheit (18) der zweiten Erfassungseinrichtung (14) und eine optische Sensoreinheit des Kraftfahrzeugs (10) zusammen als die erste Erfassungseinrichtung (12) zu dem Erfassen des Objekts (16) verwendet wird.

2. Verfahren nach Anspruch 1,
**dadurch gekennzeichnet, dass**
zumindest ein Umfeldsensor des Kraftfahrzeugs (10) als die erste Erfassungseinrichtung (12) zu dem Erfassen des Objekts (16) verwendet wird.

3. Kraftfahrzeug (10) mit
- einer ersten Erfassungseinrichtung (12) zum Erfassen eines Objekts (16) in einem Umfeld des Kraftfahrzeugs (10),
- einer von der ersten unterschiedlichen, zweiten Erfassungseinrichtung (14) zum Erfassen des Objekts (16) in dem Umfeld des Kraftfahrzeugs (10),
- einer Steuereinrichtung (22) zum Aktivieren der zweiten Erfassungseinrichtung (14), wobei
- die zweite Erfassungseinrichtung (14) dazu ausgebildet ist, einen Abstand zwischen dem Kraftfahrzeug (10) und dem Objekt (16) zu erfassen, wobei
- die zweite Erfassungseinrichtung (14) eine Sendeeinheit (20) und eine Empfangseinheit (18) umfasst, wobei
- zum Bestimmen der Entfernung zwischen dem Kraftfahrzeug (10) und dem Objekt (16) von der Sendeeinheit (20) ein Signal aussendbar ist und von der Empfangseinheit (18) eine Laufzeit des von dem Objekt (16) reflektierten Signals bestimmbar ist, und wobei
- die Steuereinrichtung (22) dazu ausgebildet ist, die Empfangseinheit (18) während eines Betriebs des Kraftfahrzeugs (10) zu aktivieren und die Sendeeinheit (20) nur dann zu aktivieren, falls mit der ersten Erfassungseinrichtung (12) ein Objekt (16) erfasst ist,
**dadurch gekennzeichnet, dass**
- die Sendeeinheit (20) dazu ausgebildet ist, Licht im infraroten Wellenlängenbereich als das Signal auszusenden und
- die Sendeeinheit (20) eine Mehrzahl von Leuchtmitteln umfasst und die Steuereinrichtung (22) dazu ausgebildet ist, beim Aktivieren der zweiten Erfassungseinrichtung (14) diejenigen Leuchtmittel zu aktivieren, die im Betrieb einen dem erfassten Objekt (16) in vorgegebener Weise zugeordneten Bereich im Umfeld des Kraftfahrzeugs (10) ausleuchten und
- die Empfangseinheit (18) der zweiten Erfassungseinrichtung (14) und eine optische Sensoreinheit des Kraftfahrzeugs (10) zusammen als die erste Erfassungseinrichtung (12) zu dem Erfassen des Objekts (16) verwendet wird.

## Claims

1. Method for capturing an object (16) in an environment of a motor vehicle (10) by
- capturing the object (16) with a first capture device (12) of the motor vehicle (10),
- activating a second capture device (14) which is different from the first capture device and
- determining a distance between the motor vehicle (10) and the object (16) with the second capture device (14), wherein
- the second capture device (14) comprises a transmitter unit (20) and a receiver unit (18), and
- the second capture device (14) is activated by activating the receiver unit (18) during operation of the motor vehicle (10) and the transmitter unit (20) is activated only when an object (16) is captured with the first capture device (12), and
- a signal is transmitted by the transmitter unit (20) and a propagation time of the signal reflected by the object (16) is determined by the receiver unit (18) for determining the distance between the motor vehicle (10) and the object (16), **characterised in that**
- the transmitter unit (20) transmits light in an infrared wavelength range as the signal,
- the transmitter unit (20) comprises a plurality of light emitting devices, wherein, when activating the second capture device (14), those light emitting devices are activated which, in operation, illuminate an area in the environment of the motor vehicle (10) associated with the captured object (16) in a predetermined manner, and
- the receiver unit (18) of the second capture device (14) and an optical sensor unit of the motor vehicle (10) are used together as the first capture device (12) for capturing the object (16).

2. Method according to claim 1,
**characterised in that**
at least one environmental sensor of the motor vehicle (10) is used as the first capture device (12) for capturing the object (16).

3. Motor vehicle (10), with
- a first capture device (12) for capturing an object (16) in an environment of the motor vehicle (10),
- a second capture device (14) which is different from the first capture device for capturing the object (16) in the environment of the motor vehicle (10),
- a control device (22) for activating the second capture device (14), wherein
- the second capture device (14) is configured to determine a distance between the motor vehicle (10) and the object (16), wherein
- the second capture device (14) comprises a transmitter unit (20) and a receiver unit (18), wherein
- for determining the distance between the motor vehicle (10) and the object (16) a signal can be transmitted by the transmitter unit (20) and a propagation time of the signal reflected by the object (16) can be determined by the receiver unit (18), and wherein
- the control device (22) is configured to activate the receiver unit (18) during operation of the motor vehicle (10) and to activate the transmitter unit (20) only when an object (16) is captured with the first capture device (12),
**characterised in that**
- the transmitter unit (20) is configured to transmit light in an infrared wavelength range as the signal, and
- the transmitter unit (20) comprises a plurality of light emitting devices and the control device (22) is configured to activate those light emitting devices when activating the second capture device (14) which, in operation, illuminate an area in the environment of the motor vehicle (10) associated with the captured object (16) in a predetermined manner, and
- the receiver unit (18) of the second capture device (14) and an optical sensor unit of the motor vehicle (10) are used together as the first capture device (12) for capturing the object (16).

## Revendications

1. Procédé de détection d'un objet (16) dans un environnement d'un véhicule automobile (10) par
- détection de l'objet (16) avec un premier dispositif de détection (12) du véhicule automobile (10),
- activation d'un second dispositif de détection (14) différent du premier et
- détermination d'une distance entre le véhicule automobile (10) et l'objet (16) avec le second dispositif de détection (14), dans lequel
- le second dispositif de détection (14) comprend une unité émettrice (20) et une unité réceptrice (18), et
- l'activation du second dispositif de détection (14) se fait en activant l'unité réceptrice (18) au cours d'un fonctionnement du véhicule automobile (10) et en activant l'unité émettrice (20) uniquement dans le cas où un objet (16) est détecté par le premier dispositif de détection (12), et
- un signal est envoyé par l'unité émettrice (20) pour déterminer la distance entre le véhicule automobile (10) et l'objet (16) et un temps de propagation du signal réfléchi par l'objet (16) est déterminé par l'unité réceptrice (18),
**caractérisé en ce que**
- de la lumière est envoyée dans la plage de longueurs d'onde infrarouge comme signal par l'unité émettrice (20),
- l'unité émettrice (20) comprend une pluralité de moyens d'éclairage, dans lequel, lors de l'activation du second dispositif de détection (14), sont activés les moyens d'éclairage qui éclairent en fonctionnement une zone affectée à l'objet détecté (16) de manière prédéterminée dans l'environnement du véhicule automobile (10) et
- l'unité réceptrice (18) du second dispositif de détection (14) et une unité de détection optique du véhicule automobile (10) sont utilisées conjointement comme premier dispositif de détection (12) pour détecter l'objet (16).

2. Procédé selon la revendication 1,
**caractérisé en ce que**
au moins un capteur environnemental du véhicule automobile (10) est utilisé comme premier dispositif de détection (12) pour détecter l'objet (16).

3. Véhicule automobile (10) avec
- un premier dispositif de détection (12) pour détecter un objet (16) dans un environnement du véhicule automobile (10),
- un second dispositif de détection (14) différent du premier pour détecter l'objet (16) dans l'environnement du véhicule automobile (10),
- un dispositif de commande (22) pour activer le second dispositif de détection (14), dans lequel
- le second dispositif de détection (14) est conçu pour détecter une distance entre le véhicule automobile (10) et l'objet (16), dans lequel
- le second dispositif de détection (14) comprend une unité émettrice (20) et une unité réceptrice (18), dans lequel
- pour déterminer la distance entre le véhicule automobile (10) et l'objet (16), un signal peut être envoyé par l'unité émettrice (20) et un temps de propagation du signal réfléchi par l'objet (16) peut être déterminé par l'unité réceptrice (18), et dans lequel
- l'unité de commande (22) est conçue pour activer l'unité réceptrice (18) au cours d'un fonctionnement du véhicule automobile (10) et pour activer l'unité émettrice (20) uniquement dans le cas où le premier dispositif de détection (12) détecte un objet (16),
**caractérisé en ce que**
- l'unité émettrice (20) est conçue pour envoyer de la lumière comme signal dans la plage des longueurs d'onde infrarouge et
- l'unité émettrice (20) comprend une pluralité de moyens d'éclairage et le dispositif de commande (22) est conçu de manière, lors de l'activation du second dispositif de détection (14), à activer les moyens d'éclairage qui éclairent en fonctionnement une zone affectée à l'objet détecté (16) de manière prédéterminée dans l'environnement du véhicule automobile (10) et
- l'unité réceptrice (18) du second dispositif de détection (14) et une unité de capteur optique du véhicule automobile (10) sont utilisées conjointement comme premier dispositif de détection (12) pour détecter l'objet (16).
